# EUROPEAN PATENT APPLICATION

(11) **EP 4 667 409 A1**
(43) Date of publication of application: **24.12.2025**
(21) Application number: 25183130.1
(22) Date of filing: 16.06.2025
(51) Int. Cl.: B66C 7/02, B61B 10/02, B66C 11/04, B66D 1/48, A61G 7/10, B60L 5/16, B61B 3/02, B66C 9/02, B66D 3/18

(54) **CHARGEABLE HOISTS, IN-RAIL CHARGING ASSEMBLIES, SUBJECT TRANSPORT UNITS, AND RELATED METHODS**

(30) Priority: 18.06.2024 US 202463661251 P
(71) Applicant: Liko Research & Development AB, 975 92 Luleå (SE)
(72) Inventor: APPRIOU, Ronan, 975 92 Lulea (SE); SCOLAN, Maxime Emile, 975 92 Lulea (SE)
(74) Representative: Reddie & Grose LLP

(57) **Abstract**

A chargeable hoist for a subject transport unit including a rail system having one or more rails (124) includes a body (112), a contact plate (162) moveable relative to the body and electrically conductive, a control system (180) operable to move the contact plate relative to the body, and an accelerometer (170) configured to measure a movement of the body. The control system moves the contact plate relative to the body and out of engagement with the one or more rails as a function of the measured movement of the body.

## Description

The present disclosure generally relates to chargeable hoists, in-rail charging assemblies for chargeable hoists, subject transport units including chargeable hoists, and related methods of operation.

Some subject transport units include a hoist moveable along a rail system. Some subject transport units include chargeable hoists which may store power to operate a motor to lift and/or transport a subject. Often, the rail system is electrically coupled to a power source, and the chargeable hoist is charged via conductive contact between the hoist and the rail system. However, such chargeable hoists may spark, wear, or be subject to other inefficiencies due to friction between the chargeable hoists and the rail system during movement of the rail. Accordingly, a need exists for an improved chargeable hoist.

Features and advantages of the present disclosure will be set forth in the detailed description, which follows, and in part will be apparent to those skilled in the art from that description or recognized by practicing the embodiments described herein, including the detailed description as well as the appended drawings.

The invention will now be further described by way of example with reference to the accompanying drawings, in which:
FIG. 1 schematically depicts a side view of a subject transport unit, according to one or more embodiments shown and described herein;
FIG. 2 schematically depicts a rear view of the rail system of the subject transport unit of FIG. 1, according to one or more embodiments shown and described herein;
FIGS. 3A schematically depicts a side view of a biased contact of the subject transport unit of FIG. 1, according to one or more embodiments shown and described herein
FIG. 3B schematically depicts a side view of a biased contact of the subject transport unit of FIG. 1, according to one or more embodiments shown and described herein;
FIG. 4A schematically depicts a method of operating the subject transport unit of FIG. 1, according to one or more embodiments shown and described herein;
FIG. 4B schematically depicts a method of operating the subject transport unit of FIG. 1, according to one or more embodiments shown and described herein;
FIG. 5 schematically depicts control logic for a control system of the subject transport lift of FIG. 1, according to one or more embodiments shown and described herein;
FIG. 6 schematically depicts a side view of another subject transport unit, according to one or more embodiments shown and described herein;
FIGS. 7A schematically depicts a side view of a biased contact of the subject transport unit of FIG. 6, according to one or more embodiments shown and described herein;
FIG. 7B schematically depicts a side view of a biased contact of the subject transport unit of FIG. 6, according to one or more embodiments shown and described herein;
FIG. 8 schematically depicts a side view of yet another subject transport unit, according to one or more embodiments shown and described herein;
FIGS. 9A schematically depicts a side view of a biased contact of the subject transport unit of FIG. 8, according to one or more embodiments shown and described herein
FIG. 9B schematically depicts a side view of a biased contact of the subject transport unit of FIG. 8, according to one or more embodiments shown and described herein; and
FIG. 10 schematically depicts a side view of yet another subject transport unit, according to one or more embodiments shown and described herein;
FIG. 11A schematically depicts a side view of a biased contact of the subject transport unit of FIG. 10, according to one or more embodiments shown and described herein; and
FIG. 11B schematically depicts a side view of a biased contact of the subject transport unit of FIG. 10, according to one or more embodiments shown and described herein.

### DETAILED DESCRIPTION

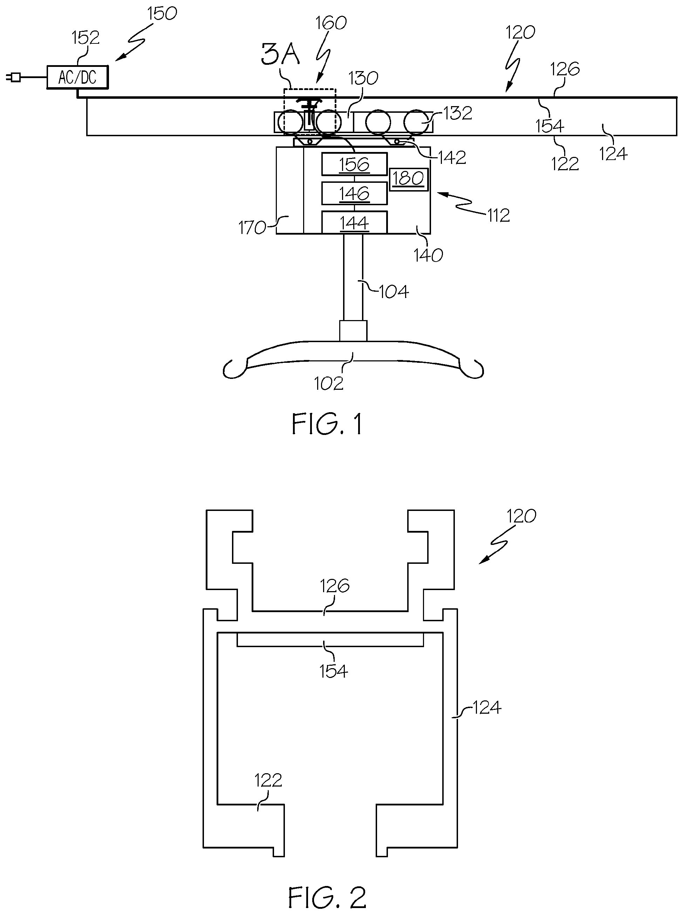

Reference will now be made in detail to various embodiments of devices, assemblies, and methods, examples of which are illustrated in the accompanying drawings. Whenever possible, the same reference numerals will be used throughout the drawings to refer to the same or like parts. FIG. 1 schematically depicts a chargeable hoist for a subject transport unit including a rail system having one or more rails. The chargeable hoist includes a body, a contact plate moveable relative to the body, a control system operable to move the contact plate relative to the body, and an accelerometer configured to measure a movement of the body. The control system moves the contact plate relative to the body and out of engagement with the one or more rails as a function of the measured movement of the body. Accordingly, in some embodiments, the control system may move the contact plate out of engagement with the one or more rails when a determination is made based on accelerometer data that the chargeable hoist is in motion (e.g., moving along a rail). This may be beneficial in some embodiments as it may decrease instances of sparking, wear, increased electrical resistance, and other inefficiencies created from friction between the contact plate and the one or more rails. The control system may move the contact plate into engagement with the one or more rails when the chargeable hoist is at rest, thereby enabling the chargeable hoist to charge through the contact with the one or more rails at that time.

Directional terms as used herein - for example up, down, right, left, front, back, top, bottom - are made only with reference to the figures as drawn and are not intended to imply absolute orientation unless otherwise specified.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any device or assembly claim does not actually recite an order or orientation to individual components, or it is not otherwise specifically stated in the claims or description that the steps are to be limited to a specific order, or that a specific order or orientation to components of an device or assembly is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

FIG. 1 depicts a side view of a subject transport unit 100 including a rail system 120. The rail system 120 includes one or more rails 124 (e.g., a single rail or a plurality of rails). The subject transport unit 100 includes a slingbar 102 configured to support a sling (not depicted) which may lift or support a subject. The slingbar 102 may be coupled to and moveable along the one or more rails 124 with a chargeable hoist 110 as described herein. In some embodiments, the one or more rails 124 may comprise a plurality of rails coupled together such that the chargeable hoist 110 may be transferred between the plurality of rails.

The chargeable hoist 110 may have a body 112 including a carrier 130 and a housing 140. The carrier 130 may be coupled to the one or more rails 124. In particular, the carrier 130 may include a plurality of transport wheels 132 which may contact the one or more rails 124 and be rotatable along the one or more rails 124. As depicted, in some embodiments, the transport wheels 132 may contact and be rotatable along a bottom surface 122 of the one or more rails 124. In this way, the carrier 130 may be supported by the bottom surface 122 of the one or more rails 124. In some embodiments, the carrier 130 may include one or more joints 134 which may allow hinging of the carrier 130. Specifically, a first portion 130a of the carrier 130 may be hinged or rotated about the one or more joints 134 relative to a second portion 130b. This may be beneficial in some embodiments as it may enable turning of the carrier 130 about a turn in the one or more rails 124.

Still referring to FIG. 1, the subject transport unit 100 may include a housing 140 coupled to and extending from the carrier 130. In embodiments, the housing 140 may be coupled to the carrier 130 via bolts 142. In this way, the housing 140 may effectively hang from the carrier 130 and the one or more rails 124 as depicted. The housing 140 may include a motor 144. The motor 144 may be operable to extend and retract a strap 104 which may couple the slingbar 102 to the housing 140. In this way, the motor 144 may lift or lower the slingbar 102 relative to the housing 140.

The subject transport unit 100 may include a battery 146 which may be housed within the housing 140. As depicted, the battery 146 may be electrically coupled to the motor 144. Accordingly, the battery 146 may power the motor 144. In other embodiments, the battery 146 may additionally or alternatively be coupled to a motor 144 configured to drive the transport wheels 132 of the carrier 130.

The subject transport unit 100 may include an in-rail charging assembly 150 which may selectively couple the battery 146 to a power source 152, thereby enabling intermittent charging of the battery 146 by the power source 152, as described in further detail herein. The battery 146, charged by the power source 152, may therefore provide consistent power to the motor 144, which may enable lifting and lowering of the slingbar 102 by the motor 144 and/or movement of the chargeable hoist 110 along the one or more rails 124.

In particular, the in-rail charging assembly 150 may include a conductive tape 154 electrically coupled to the power source 152. The power source 152 may be alternating current (AC) power source or direct current (DC) power source. In embodiments, the power supplied by the power source 152 may be great enough to charge the battery 146. The power supplied by the power source 152 may be sufficient (e.g., low enough) to avoid excessive heat generation, damage, or wear to components in communication with the power source 152. In some embodiments, the power source 152 may be a DC power source that has a voltage between about 24 volts and about 36 volts and/or supplies a current of less than about 1 amp.

Referring to FIGS. 1 and 2 in combination, the conductive tape 154 may extend along the one or more rails 124 and may include conductive elements, such as lines, traces, or the like (and formed from conductive material such as copper), extending through the conductive tape 154, such that contact with the conductive tape 154 provides an electrical connection to the power source 152. In some embodiments, the conductive tape 154 may be coupled to the one or more rails 124, such as with an adhesive. In other embodiments, the conductive tape 154 may be integral with the one or more rails 124. For example, the one or more rails 124 may be at least partially made from conductive material and/or may include pathways of conductive material formed within the one or more rails 124.

The in-rail charging assembly 150 may include a charger 156 that may be electrically coupled to the conductive tape 154 via a biased contact 160, described in greater detail herein. The charger 156 may be electrically coupled to and configured to charge to the battery 146 by supplying power from the power source 152 to the battery 146. The charger 156 may regulate the voltage and/or current supplied to the battery 146 to ensure appropriate and efficient charging of the battery 146. In particular, in some embodiments, the charger 156 may include a transformer, a rectifier, and/or an electronic filter to regulate the voltage and/or current supplied to the battery 146. In some embodiments, the charger 156 and/or the various components thereof may be housed within the housing 140.

In light of FIG. 1, it will now be appreciated that an electrical current from the power source 152 may travel through the conductive tape 154, to the biased contact 160, to the charger 156, and to the battery 158. In this way, the battery 158 may store power supplied by the power source 152 and may, in turn, power the motor 144.

Referring to FIGS. 1-3B in combination, the chargeable hoist 110 may include the biased contact 160. In particular, the biased contact 160 may be coupled to the body 112 such that it extends from the body 112 to selectively contact the one or more rails 124. As depicted, the biased contact 160 may be coupled to the carrier 130 in some embodiments. The biased contact 160 may, for example, be bolted, screwed, adhered, welded, brazed, or frictionally fit to the carrier 130. In other embodiments, the biased contact 160 may be coupled to the housing 140. By coupling the biased contact 160 to the carrier 130 or the housing 140 the biased contact 160 may be moved along the one or more rails 124 with the body 112 of the chargeable hoist 110.

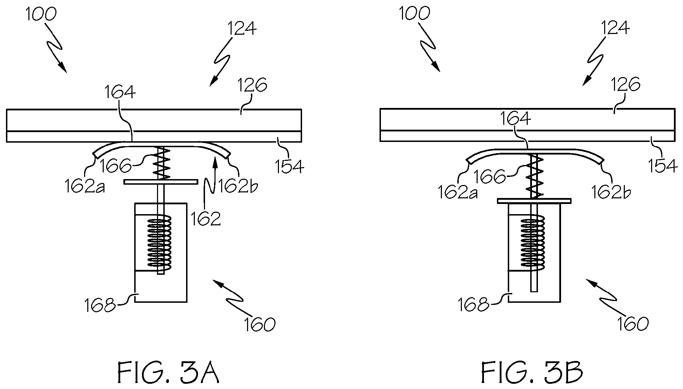

In some embodiments, the biased contact 160 may include a contact plate 162, which may selectively contact the conductive tape 154 disposed within the one or more rails 124. In particular, as depicted in FIG. 3A, the contact plate 162 may be sized and shaped to contact the conductive tape 154 along an engagement surface 164 when selectively engaged with the conductive tape 154. The engagement surface 164 may be a substantially flat geometric area extending into the page as depicted in FIG. 3A. The engagement surface 164 may extend into the page as depicted in FIG. 3A to substantially match a width of the conductive tape 154. In some embodiments, the flat geometric area of the engagement surface 164 may be beneficial as it may increase the amount and quality of physical contact as compared to a wheel. A wheel engaged on a conductive tape forms a theoretical line of contact which provides less contact area. Accordingly, the flat geometric area of the engagement surface 164 may be preferred. Similarly, the flat geometric area of the engagement surface 164 may be preferred over a smaller, point contact. In some embodiments, the engagement surface 164 of the contact plate 162 may enable higher current charging of the battery 158 due to the increased size of contact. The engagement surface 164 may be smooth, substantially smooth, nontextured, or the like to decrease friction and wear of the conductive tape 154 in the event that the engagement surface 164 is held in contact with the conductive tape 154 during movement of the chargeable hoist 110. It should be appreciated the term "substantially smooth" refers to a surface that is completely or mostly free of any texturing, voids, impressions, peaks, and/or the like. For example, a "substantially smooth" surface may be a surface that does not contain any superficial features, irregularities over a particular size (e.g., 1 mm), and/or the like.

The contact plate 162 may have curved ends 162a and 162b bounding the engagement surface 164, forming a sled shape (e.g., a shape characterized by a flat or substantially flat surface bounded by one or more curved ends). The curved ends 162a and 162b may be arcuate such that they curve away from the one or more rails 124 such as depicted. This curvature may ease motion of the contact plate 162 in the event that the contact plate is in contact with the conductive tape 154 or rail 124 while the contact plate 162 is in motion. More specifically, the first curved end 162a may ease motion in -X direction of the depicted coordinate system and the second curved end 162b may ease motion in the +X direction of the depicted coordinate system. Additionally, the curvature of the curved ends 162a and 162b may decrease stress concentrations acting at the edge of the engagement surface 164 when the contact plate 162 is held in engagement with the one or more rails 124. As will be appreciated by those skilled in the art, stress concentrations decrease with increased curvature and increase at sharp points and edges. For this reason, the curvatures of the curved ends 162a and 162b may decrease wear on the one or more rails 124, the conductive tape 154, and/or the engagement surface 164 over time. In other embodiments, the contact plate 162 may not have curved ends 162a and 162b and may instead have fillets or chamfers abutting the engagement surface 164.

It should be appreciated that the contact plate 162 is generally formed from an electrically conductive material (and thus may be referred to herein as a "conductive contact plate") so that contact between the contact plate 162 and the conductive tape 154 causes an electrical connection between the contact plate 162 and the conductive tape 154. Consequently, the other components described herein that are electrically coupled to the conductive tape 154 and electrically coupled to the contact plate 162 become electrically coupled to each other when the contact plate 162 contacts the conductive tape 154 as described herein, and when contact between the conductive tape 154 and the contact plate 162 is severed, the electrical coupling between such components is also severed.

Still referring to FIGS. 1-3B in combination, the biased contact 160 may include bias element 166. In some embodiments, the bias element 166 may be a spring, such as depicted, or may include a magnetic bias element, shape memory alloy, or other bias element. The bias element 166 may bias the contact plate 162 against the conductive tape 154. As depicted, in embodiments, the conductive tape 154 may be positioned against an upper surface 126 of the one or more rails 124. In such embodiments, the contact plate 162 may be biased generally upward (e.g., in the +Z direction of the depicted coordinate system) by the bias element 166 such that the contact plate 162 engages the conductive tape 154. In other embodiments, the bias element 166 may be biased in another direction. For example, in embodiments where the conductive tape 154 is positioned on a lateral side of the one or more rails 124, the bias element 166 may be oriented to bias the contact plate 162 in a lateral direction. Other positioning of the conductive tape 154 with respect to each of the one or more rails 124 (e.g., other than on the upper surface 126) is contemplated and included within the scope of the present disclosure.

Still referring to FIGS. 1-3B in combination, the biased contact 160 may include a solenoid 168 coupled to the contact plate 162 and operable to move the contact plate 162 relative to the body 112. In particular, the solenoid 168 may be operable to move the engagement surface 164 into and out of engagement with the conductive tape 154. The solenoid 168 when activated, creates a magnetic field that will draw the engagement surface 164 toward the solenoid 168 and away from the conductive tape 154. As depicted in FIG. 3B, when the solenoid 168 is activated (e.g. by applying a current to the solenoid 168), the solenoid 168 may overcome the bias provided by the bias element 166 and move the engagement surface 164 out of engagement with the conductive tape 154. As depicted in FIG. 3A, when the solenoid 168 is not activated (e.g. when no current is applied to the solenoid 168), the bias provided by the bias element 166 may move the engagement surface 164 into engagement with the conductive tape 154. Accordingly, the engagement surface 164 may be selectively moveable into and out of engagement with the conductive tape 154 according to the activation of the solenoid 168. In this way, the biased contact 160 may be selectively engagable with the conductive tape 154.

In light of FIGS. 1-3B, it will now be appreciated that the in-rail charging assembly 150 may selectively charge the battery 146. Accordingly, in some embodiments, the in-rail charging assembly 150 may be configured to charge the battery 146 during selected times and/or circumstances and may be configured to stop charging the battery 146 during non-selected times and/or circumstances. For example, in some embodiments, the in-rail charging assembly 150 may be configured to charge the battery 146 when the subject transport unit 100 is at rest, e.g., when the carrier 130 is stationary on the one or more rails 124. As will be described in greater detail herein, the carrier 130 may be considered "stationary" when a sensor 170 fails to detect a motion of the carrier 130 or detects a motion below a threshold value. In some embodiments, the in-rail charging assembly 150 may be configured to stop charging the battery 146 when the carrier 130 moves along the one or more rails 124. As will be described in greater detail herein, an accelerometer or other sensor may be used to distinguish between instances of movement and instances of rest. This may prevent charging when the biased contact 160 is in motion relative to the conductive tape 154. In other words, the biased contact 160 is spaced apart from the conductive tape 154 and therefore does not "drag" along the conductive tape 154 when the carrier 130 is in motion. This may be beneficial in some embodiments as it may decrease instances of sparking, wear, increased electrical resistance, and other inefficiencies created from increased friction between the biased contact 160 and the conductive tape 154.

In some embodiments, the in-rail charging assembly 150 may include a control system 180 configured to activate and deactivate the solenoid 168, thereby engaging and disengaging the biased contact 160. In some such embodiments, the control system 180 by receive input from an operator, such as via a button or switch on a user interface 182. The user interface 182 may be a remote controller, corded controller, touchscreen, or software application configured to receive the input from the operator. The control system 180 may activate or deactivate the solenoid 168 as a function of the operator input.

In some embodiments, the control system 180 may automatically engage or disengage the solenoid 168 as a function of a measurement from a sensor 170 (e.g., as determined from data transmitted from the sensor 170 that corresponds to sensed information). In some embodiments, the in-rail charging assembly 150 may include a sensor 170 such as an accelerometer, velocity sensor, or gyroscope. As depicted, the sensor 170 is positioned on the housing 140. The sensor 170 may measure a characteristic of the subject transport unit 100, such as movement of the housing 140 or carrier 130. For example, the sensor 170 may be configured and positioned to detect a lateral movement of the body 112 (e.g. movement along the one or more rails 124). Ina such an embodiment, the sensor 170 may be a single-axis accelerometer or velocity sensor. In other embodiments, the sensor 170 may be configured and positioned to detect movement of the body 112 in multiple directions. In such an embodiment, the sensor 170 may be a dual or triple axis accelerometer or velocity sensor. Accordingly, the sensor 170 may detect movement along the one or more rails 124 in addition to other movement (such as jostling) of the body 112.

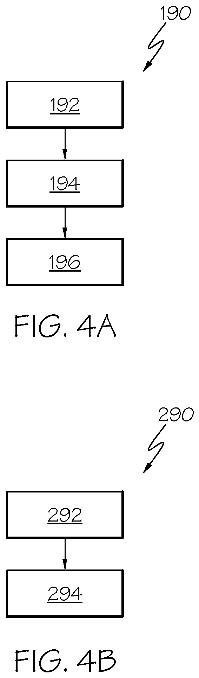

Referring now to FIGS. 1-4A in combination, the in-rail charging assembly 150 may automatically activate the solenoid 168 to disengage the biased contact 160 when the sensor 170 senses that the housing 140 or the carrier 130 is in motion. More specifically, a method 190 of operating the chargeable hoist 110 may include, as a first step 192, measuring movement data of the chargeable hoist 110 with the sensor 170. The method 190 may include, as a second step 194, determining, with the control system 180, whether the movement data of the chargeable hoist 110 indicates a sufficient movement of the chargeable hoist 110. In some embodiments, the control system 180 may determine movement to be sufficient when the sensor 170 detects a non-zero value of velocity and/or acceleration. In other embodiments, the control system 180 may determine movement to be sufficient when the sensor 170 detects a value of velocity and/or acceleration that exceeds a threshold. The threshold may be selected such that the in-rail charging assembly 150 continues charging during routine moving or jostling of the body 112 (such as, e.g., during raising and lowering of the slingbar 102). As a third step 196, the control system 180 may activate the solenoid 168, which may move the biased contact 160 out of engagement with the conductive tape 154. Accordingly, the in-rail charging assembly 150 will cease charging.

Referring now to FIGS. 1-3B and 4B in combination, the in-rail charging assembly 150 may automatically deactivate the solenoid 168 to engage the biased contact 160 when the sensor 170 senses that the housing 140 or the carrier 130 is stationary. More specifically, a method 290 to initiate charging the chargeable hoist 110 may include, as a first step 292, detecting a lack of movement of the chargeable of the chargeable hoist 110 with the sensor 170. More specifically, the sensor 170 may detect a lack of movement when the sensor 170 no longer detects a non-zero value of velocity and/or acceleration or when the value of velocity and/or acceleration no longer exceeds the threshold. As described above, in some embodiments, the threshold may be selected such that the in-rail charging assembly 150 continues charging during routine moving or jostling of the body 112 (such as, e.g., during raising and lowering of the slingbar 102). The method 290 may include a second step 294, wherein the control system 180 may deactivate the solenoid 168. This may move the biased contact 160 into of engagement with the conductive tape 154. As a result, the in-rail charging assembly 150 initiates charging.

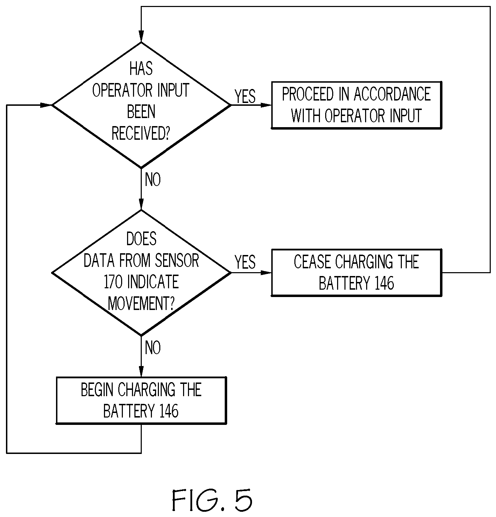

Referring now to FIG. 5, in some embodiments, the control system 180 may control charging of the battery 146 (e.g. engage or disengage the biased contact 160 from the one or more rails 124) as a function of operator input, measured data from the sensor 170, or both. As depicted, in embodiments where the control system 180 is configured to receive both operator input and measured data from the sensor 170, the control system 180 may prioritize operator input (e.g., operate in accordance with operator input instead of measured data when a conflict exists between the two). In other words, if operator input is received, the control system 180 may control the charging of the battery 146 as a function of operator input. If no operator input is received, the control system 180 may control charging of the battery 146 as a function of measured data from the sensor 170. As will be appreciated, in light of FIG. 5, in the event that the control system 180 receives conflicting operator input (e.g., if the control system 180 receives an input from the operator indicating that charging of the battery 146 should cease when the control system 180 would otherwise continue charging the battery 146 based on the measured data from the sensor 170), the control system 180 may control the charging of the battery 146 in accordance with the operator input.

In some embodiments, the user interface 182 may receive an operator input to turn "off" or "on" the control of the charging of the battery 146 by the control system 180 as a function of measured data from the sensor 170. If the operator input indicates a selection by the operator to turn "off" the default automatic control of the charging of the battery 146 by the control system 180 as a function of measured data from the sensor 170, then the control system 180 may control the charging of the battery 146 as a function of operator input exclusively. If the operator input indicates a selection by the operator to turn "on" the default automatic control of the charging of the battery 146 by the control system 180 as a function of measured data from the sensor 170, then the control system 180 may control the charging of the battery 146 as a function of measured data from the sensor 170 as described above in reference to FIG. 5.

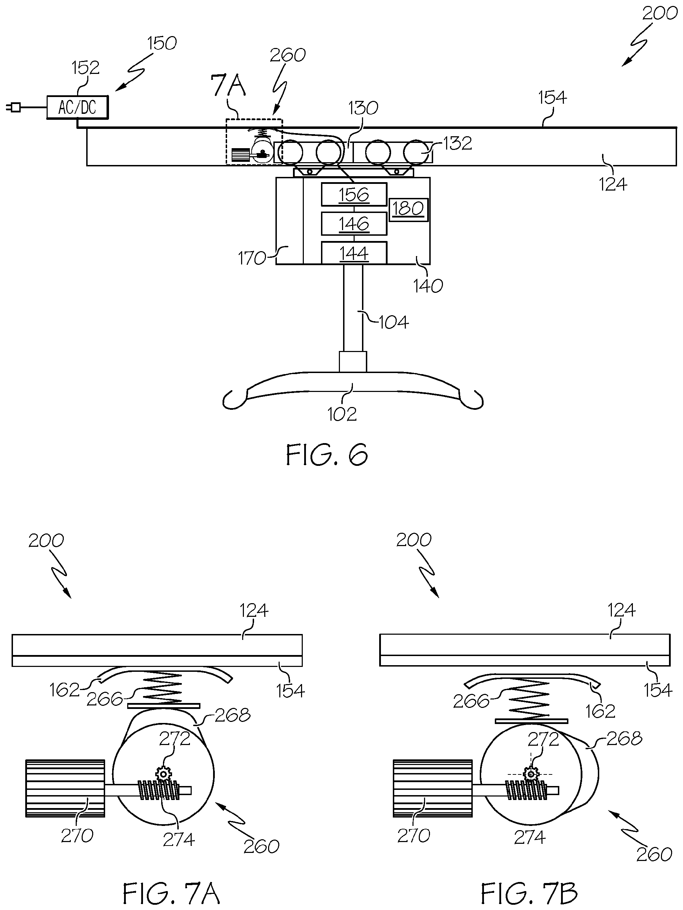

Referring now to FIGS. 6-7B in combination, an embodiment of a subject transport unit 200 is schematically depicted. The subject transport unit 200 is similar to the subject transport unit 100. Accordingly, like numbers will be used to refer to like features. For example, the subject transport unit 200 may have a carrier 130 movable along one or more rails 124.

The subject transport unit 200 may include a biased contact 260 selectively engagable with the conductive tape 154. The biased contact 260 may include a contact plate 162 biased toward the conductive tape 154 with a bias element 266. In some embodiments, the bias element 266 may be compressible such that the contact plate 162 may be moveable through a vertical range (e.g. a range in the +/- Z direction of the depicted coordinate system). As will be appreciated, the precise location of the one or more rails 124 and/or the components of the biased contact 260 may vary due to manufacturing tolerance and manufacturing errors. Accordingly, the compressibility of the bias element 266 may enable contact between the biased contact 260 and the one or more rails 124 to be achieved even with such variability.

The biased contact 260 may include a cam 268 which may be rotatable about an axis A. The cam 268 may be coupled to and rotated by a motor 270. As shown, the motor 270 may be separate from the motor 144. The motor 270 may be coupled to and positioned on the carrier 130. In embodiments, the cam 268 may be coupled to the motor 270 via a gear or other engagement, such as depicted, or may be fixed to or integral with the motor 270. More specifically, in some embodiments, the cam 268 may include a gear 272 engaged with a screw 274 fixedly coupled to the motor 270. Accordingly, rotation of the motor 270 may rotate the screw 274, which may, in turn, rotate the gear 272 and the cam 268. In some embodiments, the motor 270 may be communicably coupled to the control system 180 such that the control system 180 may control rotation of the motor 270.

As shown, the cam 268 may be rotatable between an engaged position, depicted in FIG. 7A, and a disengaged position, depicted in FIG. 7B. In the engaged position, the cam 268 may cause engagement of the contact plate 162 with the conductive tape 154 (e.g., a coordinated movement of the contact plate 162). More specifically, as depicted, the cam 268 may push the bias element 166 and the contact plate 162 generally upward to cause the contact plate 162 to contact the conductive tape 154 (e.g. generally in the +Z direction of the depicted coordinate system). As depicted in FIG. 7B, in the disengaged position, the cam 268 may rotate such that the bias element 166 and the contact plate 162 are lowered relative to the conductive tape 154 (e.g. in the -Z direction of the depicted coordinate system). Accordingly, the in-rail charging assembly 150 may selectively engage and disengage the biased contact 260 with the conductive tape 154 by rotating the cam 268.

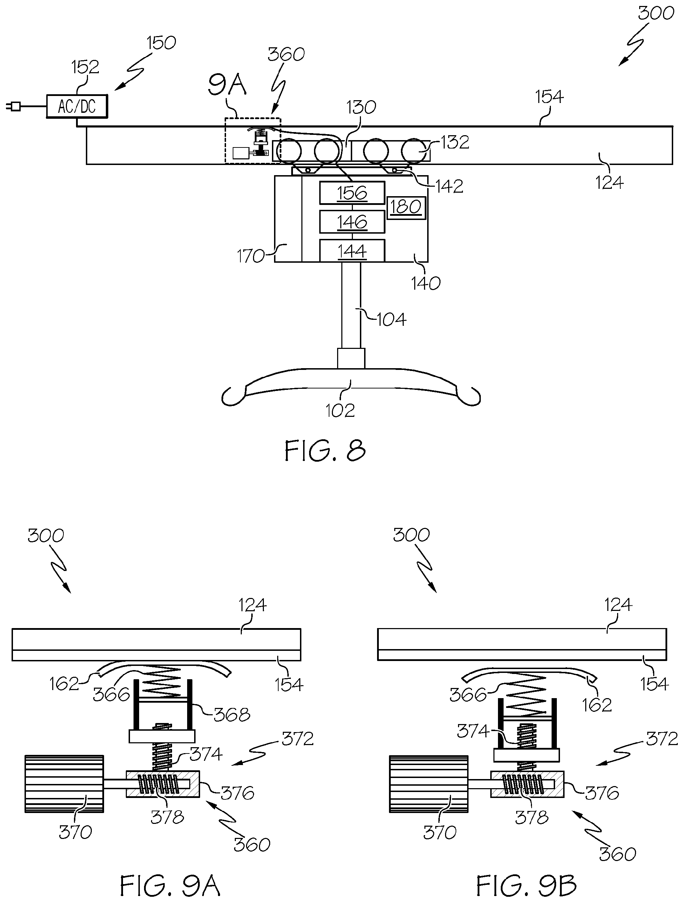

Referring now to FIGS. 8-9B in combination, an embodiment of a subject transport unit 300 is schematically depicted. The subject transport unit 300 is similar to the subject transport units 100 and 200. Accordingly, like numbers will be used to refer to like features. For example, the subject transport unit 300 may have a carrier 130 movable along one or more rails 124.

The subject transport unit 300 may include a biased contact 360 selectively engagable with the conductive tape 154. The biased contact 360 may include a contact plate 162 biased toward the conductive tape 154 with a bias element 366. As depicted, the bias element 366 may be coupled to an arm 368 moveable in a lateral direction (e.g. upwards and downwards as depicted in FIGS. 9A and 9B). For example, the bias element 366 may be bolted, screwed, adhered, welded, brazed, or frictionally fit to the arm 368. Accordingly, as the arm 368 is moved, the bias element 366 and the contact plate 162 may also move. As described with respect to the bias element 266, above, the bias element 366 may enable contact between the contact plate 162 and the conductive tape 154 in the event of manufacturing variability. In some embodiments, the bias element 366 may not be included. Instead, the contact plate 162 may be coupled directly to the arm 368.

In some embodiments, the arm 368 may be operably coupled to and moveable by a motor 370. As depicted, the motor 370 may be separate from the motor 144. The motor 370 may be coupled to and positioned on the carrier 130. In embodiments, the motor 370 may be communicably coupled to the control system 180 such that the control system 180 may control rotation of the motor 370.

As depicted, in some such embodiments, the arm 368 may be coupled to the motor 370 via a gear system 372. The gear system 372 may include a first screw 374 fixedly coupled to the motor 370. Accordingly, rotation of the motor 370 may cause rotation of the first screw 374. The first screw 374 may be engagable with a gear wheel 376 such that rotation of the first screw 374 causes rotation of the gear wheel 376. The gear system 372 may include a second screw 378 coupled to the gear wheel 376 and threadedly engaged with the arm 368. Accordingly, rotation of the gear wheel 376 may cause rotation of the second screw 378, and rotation of the second screw 378 may cause lateral movement of the arm 368. As will be appreciated by those skilled in the art, other elements and arrangements may be included to convert rotational movement of the motor 370 to lateral movement of the arm 368.

Still referring to FIGS. 8-9B, as the arm 368 moves upward, the contact plate 162 may move upward, thereby engaging the contact plate 162 with the conductive tape 154, as show in particular in FIG. 9A. As shown in FIG. 9B, as the arm 368 moves downward, the contact plate 162 may move downward, thereby disengaging the contact plate 162 from the conductive tape 154. Accordingly, the in-rail charging assembly 150 may selectively engage and disengage the biased contact 360 with the conductive tape 154.

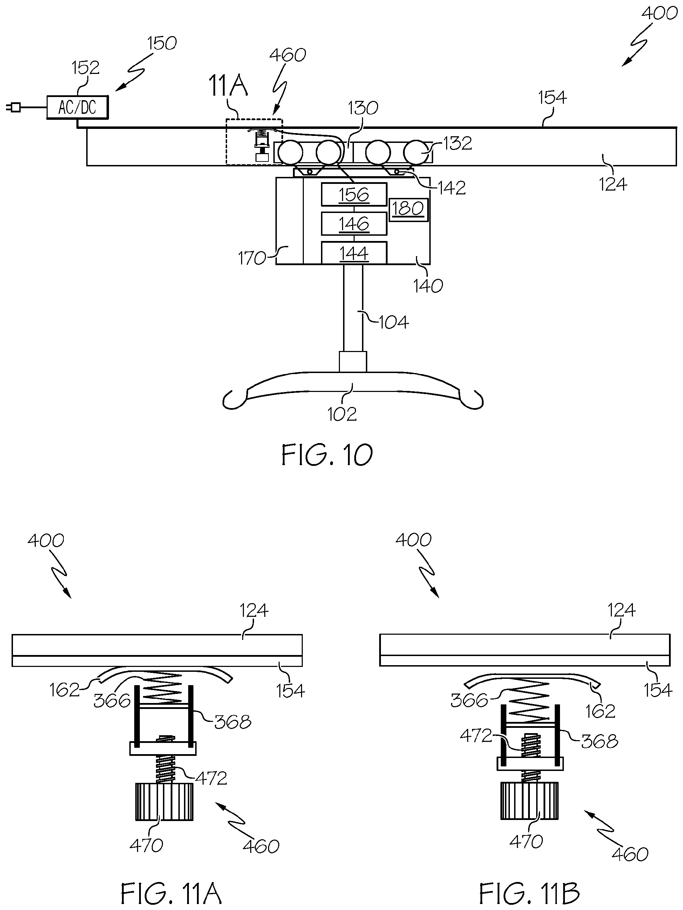

Referring now to FIGS. 10-11B in combination, an embodiment of a subject transport unit 400 is schematically depicted. The subject transport unit 400 is similar to the subject transport units 100, 200, and 300. Accordingly, like numbers will be used to refer to like features. For example, the subject transport unit 400 may have a carrier 130 movable along one or more rails 124.

The subject transport unit 400 may include a biased contact 360 selectively engagable with the conductive tape 154. The biased contact 360 may include a contact plate 162 biased toward the conductive tape 154 with a bias element 366. As depicted, the bias element 366 may be coupled to an arm 368 moveable in a lateral direction (e.g. upwards and downwards as depicted in FIGS. 11A and 11B). In some embodiments, the arm 368 may be operably coupled to and moveable by a motor 470. In particular, as depicted, in some such embodiments, the arm 368 may be coupled to the motor 470 via a screw 472. As depicted, the motor 470 may be separate from the motor 144. The motor 470 may be coupled to and positioned on the carrier 130. In embodiments, the motor 470 may be communicably coupled to the control system 180 such that the control system 180 may control rotation of the motor 470.

Embodiments of the invention can be described with reference to the following numbered clauses, with preferred features laid out in the dependent clauses:
1. A chargeable hoist for a subject transport unit including a rail system having one or more rails, the chargeable hoist comprising:
   a body;
   a contact plate moveable relative to the body and electrically conductive;
   a control system operable to move the contact plate relative to the body; and
   a sensor configured to measure a movement of the body,
   wherein the control system moves the contact plate relative to the body and out of engagement with the one or more rails as a function of the measured movement of the body.
2. The chargeable hoist of clause 1, wherein the contact plate is biased toward the engagement with the one or more rails.
3. The chargeable hoist of any of clauses 1-2, wherein the control system moves the contact plate out of engagement with the one or more rails when the sensor measures a movement of the body above a predetermined threshold.
4. The chargeable hoist of any of clauses 1-3, wherein the control system moves the contact plate into engagement with the one or more rails when the sensor measures no movement of the body.
5. The chargeable hoist of any of clauses 1-4, further comprising a motor operatively coupled to the contact plate, wherein the control system is operable to control the motor.
6. The chargeable hoist of clause 5, further comprising a battery operable to power the motor, wherein the contact plate is electrically coupled to the battery.
7. The chargeable hoist of any of clauses 1-4, further comprising a solenoid operatively coupled to the contact plate and configured to move the contact plate out of engagement with the one or more rails when activated, wherein the control system is operable to activate the solenoid.
8. The chargeable hoist of any of clauses 1-6, further comprising a cam operatively coupled to the contact plate such that a movement of the cam causes a coordinated movement of the contact plate, wherein the control system is operable to control the cam.
9. An in-rail charging assembly, comprising:
   the chargeable hoist according to any one of the previous clauses;
   one or more rails, wherein the chargeable hoist comprises a carrier coupled to the one or more rails; and
   conductive tape configured to extend along the one or more rails.
10. A chargeable hoist for a subject transport unit including a rail system having one or more rails, the chargeable hoist comprising:
   a body;
   a contact plate moveable relative to the body and biased against the one or more rails;
   a solenoid coupled to the contact plate and operable to move the contact plate out of engagement with the one or more rails; and
   a control system operable to activate the solenoid.
11. The chargeable hoist of clause 10, wherein the control system activates the solenoid as a function of an operator input.
12. The chargeable hoist of any of clauses 10-11, wherein the control system activates the solenoid as a function of a sensor input.
13. The chargeable hoist of any of clauses 10-12, further comprising a spring coupled to the contact plate and configured to bias the contact plate toward the one or more rails.
14. The chargeable hoist of any of clauses 10-13, wherein the contact plate has a substantially flat engagement surface.
15. The chargeable hoist of any of clauses 10-14, wherein the contact plate has a sled shape.
16. A subject transport unit comprising:
   a rail system comprising one or more rails;
   conductive tape positioned along a top surface of the one or more rails; and
   a chargeable hoist coupled to the one or more rails, comprising:
      a body;
      a contact plate moveable relative to the body and engagable with the conductive tape;
      a control system operable to move the contact plate relative to the body; and
      an accelerometer configured to measure a movement of the body,
      wherein the control system moves the contact plate relative to the body and out of engagement with the conductive tape as a function of the measured movement of the body.
17. The subject transport unit of clause 16, further comprising a solenoid operatively coupled to the contact plate, wherein the control system is operable to control the solenoid.
18. The subject transport unit of any of clauses 16-17, wherein the contact plate has a substantially flat engagement surface bound by a first curved end and a second curved end.
19. The subject transport unit of any of clauses 16-18, wherein the contact plate is biased toward engagement with the one or more rails.
20. The subject transport unit of any of clauses 16-19, further comprising a strap extendable from the body and a slingbar coupled to the strap.
21. A method of operating a chargeable hoist on a rail, the method comprising:
   charging the chargeable hoist via the rail, wherein the chargeable hoist comprises:
      a body;
      a contact plate moveable relative to the body, wherein the contact plate is electrically conductive and engaged with the rail; and
      a control system operable to move the contact plate relative to the body;
   measuring movement data of the chargeable hoist with a sensor;
   determining, with the control system, whether sufficient movement of the chargeable hoist has occurred based on the measured movement data; and
   when sufficient movement of the chargeable hoist has occurred, automatically moving the contact plate, with the control system, out of engagement with the rail, ceasing charging of the chargeable hoist.
22. The method of clause 21, wherein determining whether sufficient movement of the chargeable hoist has occurred comprises determining whether the measured movement data exceeds a threshold.
23. The method of clause 21 or 22, wherein the chargeable hoist comprises a solenoid coupled to the contact plate and configured to move the contact plate relative to the body, wherein moving the contact plate out of engagement with the rail comprises activating the solenoid.
24. The method of clause 21 or 22, wherein the chargeable hoist comprises a motor coupled to the contact plate and configured to move the contact plate relative to the body, wherein moving the contact plate out of engagement with the rail comprises activating the motor.
25. The method of any of clauses 21-24 wherein the contact plate has a bias toward engagement with the rail, wherein moving the contact plate out of engagement with the rail comprises overcoming the bias.
26. The method of any of clauses 21-25, further comprising:
   determining, with the control system, if the measured movement data indicates a lack of movement; and
   when the lack of movement is determined, automatically moving the contact plate, with the control system, into engagement with the rail, thereby initiated charging of the chargeable hoist.
27. An in-rail charging assembly for a chargeable hoist, comprising:
   a conductive contact plate movable relative to a body of the chargeable hoist and engagable with a rail;
   a bias element coupled to the contact plate, the bias element biasing the contact plate toward the rail; and
   a solenoid coupled to the contact plate and operable to move the contact plate out of engagement with the rail.
28. The in-rail charging assembly of clause 27, wherein the conductive contact plate has a substantially flat engagement surface configured to contact the rail.
29. The in-rail charging assembly of clause 28, wherein the conductive contact plate has a first curved end and a second curved end, the first curved end and the second curved end bounding the substantially flat engagement surface.
30. The in-rail charging assembly of any of clauses 27-29, wherein the bias element is a spring positioned to bias the conductive contact plate in an upward direction.
31. The in-rail charging assembly of any of clauses 29-30, further comprising an accelerometer positioned to measure a movement of the in-rail charging assembly along the rail.

## Claims

1. A chargeable hoist for a subject transport unit including a rail system having one or more rails, the chargeable hoist comprising:
a body;
a contact plate moveable relative to the body and electrically conductive;
a control system operable to move the contact plate relative to the body; and
a sensor configured to measure a movement of the body,
wherein the control system moves the contact plate relative to the body and out of engagement with the one or more rails as a function of the measured movement of the body.

2. The chargeable hoist of claim 1, wherein the contact plate is biased toward the engagement with the one or more rails.

3. The chargeable hoist of any of claims 1-2, wherein the control system moves the contact plate out of engagement with the one or more rails when the sensor measures a movement of the body above a predetermined threshold.

4. The chargeable hoist of any of claims 1-3, wherein the control system moves the contact plate into engagement with the one or more rails when the sensor measures no movement of the body.

5. The chargeable hoist of any of claims 1-4, further comprising a motor operatively coupled to the contact plate, wherein the control system is operable to control the motor.

6. The chargeable hoist of claim 5, further comprising a battery operable to power the motor, wherein the contact plate is electrically coupled to the battery.

7. The chargeable hoist of any of claims 1-4, further comprising a solenoid operatively coupled to the contact plate and configured to move the contact plate out of engagement with the one or more rails when activated, wherein the control system is operable to activate the solenoid.

8. The chargeable hoist of any of claims 1-6, further comprising a cam operatively coupled to the contact plate such that a movement of the cam causes a coordinated movement of the contact plate, wherein the control system is operable to control the cam.

9. An in-rail charging assembly, comprising:
the chargeable hoist according to any one of the previous claims;
one or more rails, wherein the chargeable hoist comprises a carrier coupled to the one or more rails; and
conductive tape configured to extend along the one or more rails.

10. A method of operating a chargeable hoist on a rail, the method comprising:
charging the chargeable hoist via the rail, wherein the chargeable hoist comprises:
a body;
a contact plate moveable relative to the body, wherein the contact plate is electrically conductive and engaged with the rail; and
a control system operable to move the contact plate relative to the body;
measuring movement data of the chargeable hoist with a sensor;
determining, with the control system, whether sufficient movement of the chargeable hoist has occurred based on the measured movement data; and
when sufficient movement of the chargeable hoist has occurred, automatically moving the contact plate, with the control system, out of engagement with the rail, ceasing charging of the chargeable hoist.

11. The method of claim 10, wherein determining whether sufficient movement of the chargeable hoist has occurred comprises determining whether the measured movement data exceeds a threshold.

12. The method of claim 10 or 11, wherein the chargeable hoist comprises a solenoid coupled to the contact plate and configured to move the contact plate relative to the body, wherein moving the contact plate out of engagement with the rail comprises activating the solenoid.

13. The method of claim 10 or 11, wherein the chargeable hoist comprises a motor coupled to the contact plate and configured to move the contact plate relative to the body, wherein moving the contact plate out of engagement with the rail comprises activating the motor.

14. The method of any of claims 10-13 wherein the contact plate has a bias toward engagement with the rail, wherein moving the contact plate out of engagement with the rail comprises overcoming the bias.

15. The method of any of claims 10-14, further comprising:
determining, with the control system, if the measured movement data indicates a lack of movement; and
when the lack of movement is determined, automatically moving the contact plate, with the control system, into engagement with the rail, thereby initiated charging of the chargeable hoist.
